Europäisches Patentamt

(19) European Patent Office

Office européen des brevets

(11) Numéro de publication : **0 211 853**
**B1**

(12) FASCICULE DE BREVET EUROPÉEN

(45) Date de publication du fascicule du brevet :
20.09.89

(51) Int. Cl.⁴ : **G 21 C 21/08**

(21) Numéro de dépôt : 86900787.2

(22) Date de dépôt : 21.01.86

(86) Numéro de dépôt international :
PCT/FR 86/00015

(87) Numéro de publication internationale :
WO/8604729 (14.08.86 Gazette 86/18)

(54) DISPOSITIF D'ENGAINAGE DE PASTILLES COMBUSTIBLES.

(30) Priorité : 07.02.85 FR 8501717

(43) Date de publication de la demande :
04.03.87 Bulletin 87/10

(45) Mention de la délivrance du brevet :
20.09.89 Bulletin 89/38

(84) Etats contractants désignés :
BE DE GB IT

(56) Documents cités :
FR—A— 2 121 687
FR—A— 2 212 941
FR—A— 2 522 436
GB—A— 2 022 309

(73) Titulaire : COMMISSARIAT A L'ENERGIE ATOMIQUE
31/33, rue de la Fédération
F-75015 Paris (FR)

(72) Inventeur : MABBOUX, Marcel
186, montée des Bassins
F-04100 Manosque (FR)
Inventeur : MERCIER, Claude
Montée de Manen
Chemin du Clos F-04100 Manosque (FR)

(74) Mandataire : Mongrédien, André et al
c/o BREVATOME 25, rue de Ponthieu
F-75008 Paris (FR)

## Description

La présente invention a pour objet un dispositif d'engainage de pastilles combustibles. Elle s'applique en particulier à l'introduction de pastilles combustibles dans une gaine pour former une aiguille de combustibles nucléaires.

Le remplissage des gaines par des pastilles combustibles pose des problèmes d'ordre mécanique. En effet, le jeu existant entre la gaine et les pastilles est très faible et les pastilles ont tendance à s'effriter lors de leur introduction du fait des frottements. Il en résulte un risque de contamination accru.

L'opération d'engainage s'effectue généralement à l'aide d'une buse d'engainage dont le rôle est :

d'aligner le plus correctement possible l'axe de la gaine avec l'axe de la colonne de pastilles à engainer,

de limiter au maximum la propagation de la contamination sur la gaine.

Cette dernière fonction est mal réalisée avec les dispositifs habituellement utilisés. On peut citer par exemple le brevet français FR-A 2 522 436 qui décrit un dispositif d'introduction de pastilles radioactives dans un récipient tubulaire. Ce dispositif comporte une buse d'engainage comprenant un alésage séparé en deux parties par un épaulement droit formant butée ; la gaine vient s'appuyer contre cet épaulement et les pastilles sont introduites par l'autre extrémité de la buse d'engainage afin d'être enfilées. La buse d'engainage peut être mise en rotation afin d'aider la pénétration des pastilles dans la gaine. Avec ce dispositif, l'extrémité de la gaine est contaminée par l'effritement des pastilles lors de l'introduction. Il est nécessaire d'effectuer ensuite un nettoyage manuel de l'extrémité de chaque aiguille avant la pose du bouchon. Ceci nécessite donc une opération supplémentaire coûteuse et délicate du fait des risques radioactifs.

La présente invention a pour objet un dispositif d'engainage de pastilles combustibles dans une gaine, permettant de pallier aux inconvénients mentionnés précédemment. Le dispositif selon l'invention garantit un alignement gaine-pastille à moins de 0,02 mm, limite les risques de blocage de la colonne de pastilles combustibles lors de l'opération d'engainage et surtout évite la contamination de l'extrémité de la gaine et donc de l'aiguille combustible.

Plus précisément, le dispositif d'engainage selon l'invention comprend une buse d'engainage comportant un alésage séparé, en une première partie dont le diamètre correspond sensiblement au diamètre externe de la gaine et une seconde partie dont le diamètre correspond sensiblement au diamètre externe des pastilles, par un épaulement formant butée, et des moyens pour introduire les pastilles dans la seconde partie de l'alésage, la gaine étant introduite dans la première partie et en butée contre l'épaulement, et caractérisé en ce que ledit épaulement comporte une paroi tronconique, la section méridienne dudit épaulement formant un angle aigu orienté vers la gaine, de telle sorte que la gaine vient en butée contre la paroi de l'épaulement selon un cercle, et en ce qu'une gorge annulaire limitée d'un côté par ledit épaulement est formée dans la première partie de l'alésage et que ladite gorge est mise en communication avec des moyens d'injection de gaz permettant le nettoyage de l'extrémité de la gaine.

Avantageusement, au moins une fenêtre communiquant avec des moyens d'aspiration de gaz est ménagée dans la seconde partie de l'alésage, afin d'éliminer les éclats et poussières de pastilles combustibles.

Le dispositif est pourvu d'un poussoir permettant de déplacer les pastilles d'un vé de guidage dans la seconde partie de l'alésage de la buse d'engainage puis dans la gaine.

De préférence, des moyens d'entraînement sont pourvus pour mettre en rotation la gaine. Le gaz circulant dans la buse d'engainage grâce aux moyens d'injection et aux moyens d'aspiration est avantageusement de l'hélium.

D'autres caractéristiques et avantages de l'invention ressortiront plus précisément de la description qui suit donnée à titre explicatif mais nullement limitatif en référence aux figures annexées, sur lesquelles :

la figure 1 représente, en coupe longitudinale, un mode de réalisation préféré du dispositif d'engainage selon l'invention, et

la figure 2 représente, en coupe longitudinale et à plus grande échelle, une partie de la buse d'engainage et plus précisément la gorge annulaire ménagée dans son alésage, la partie encerclée étant représenté de façon agrandie.

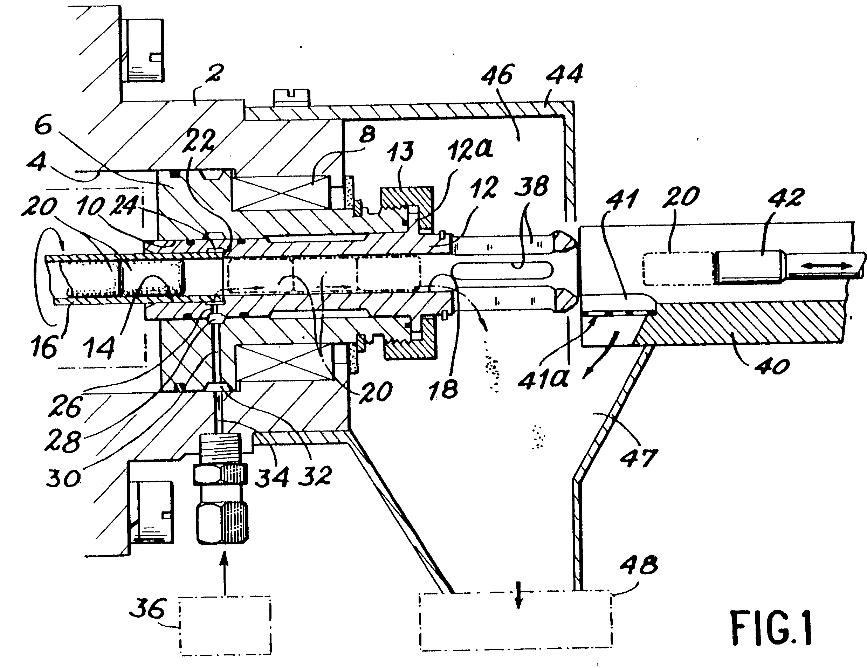

Un mode préféré de réalisation du dispositif d'engainage selon l'invention est représenté sur la figure 1.

Le dispositif selon l'invention comprend un bâti 2 dans lequel un alésage horizontal 4 est percé. Un manchon 6 cylindrique est logé dans cet alésage 4 à rotation grâce à un organe de roulement 8, par exemple un roulement à rouleaux ou à billes. Des dispositifs classiques, circlips, épaulement... assurent le maintien en translation du manchon 6 par rapport au bâti 2. Un trou 10 est percé dans le manchon 6, coaxialement audit alésage 4.

Une buse d'engainage 12 de forme sensiblement tubulaire est montée dans le trou 10, où elle est fixée, par exemple, au moyen d'un écrou 13 vissé sur une extrémité filetée du manchon 6 de façon à bloquer une collerette 12a de la buse contre cette extrémité. La buse 12 comporte un alésage intérieur coaxial au trou 10 et séparé en deux parties. Une première partie 14 dont le diamètre correspond sensiblement au diamètre externe d'une gaine 16 à remplir de pastilles combustibles et une seconde partie 18 dont le diamètre correspond sensiblement au diamètre externe des pastilles 20 destinées à être engainées dans la gaine 16.

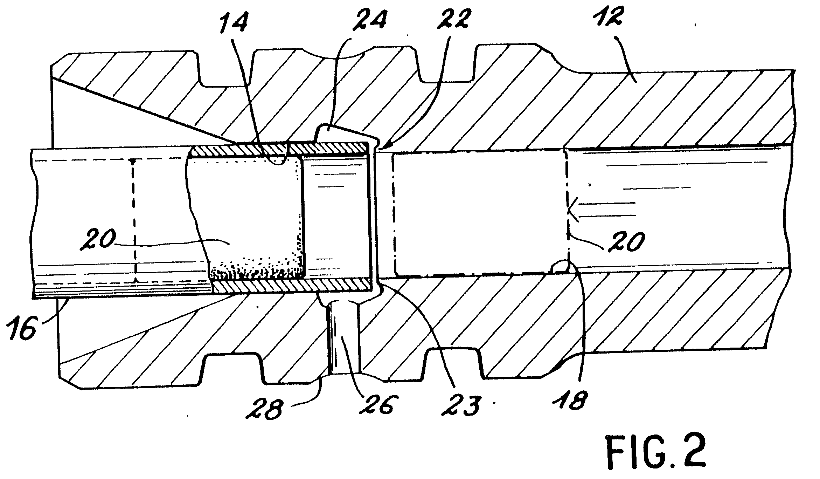

La figure 2 représente un agrandissement en coupe de la buse d'engainage 12. On voit que l'alésage 14, 18 est séparé en deux parties par un épaulement 22 formant butée pour la gaine 16. L'épaulement 22 comporte une paroi tronconique 23, la section méridienne de cet épaulement 22 formant un angle aigu orienté vers la gaine 16. L'extrémité de la gaine 16 vient s'appuyer sur la paroi tronconique 23 de l'épaulement 22 selon un cercle. Lorsque la gaine 16 est appliquée contre l'épaulement 22, le contact est limité audit cercle, permettant ainsi une bonne étanchéité entre l'alésage intérieur et l'extrémité de la gaine 16.

Une gorge annulaire 24, limitée par l'épaulement 22 est formée dans la première partie 14 de l'alésage. Cette gorge 24 est mise en communication, par au moins un trou radial 26, avec une seconde gorge annulaire 28 formée entre la face extérieure de la buse 12 et le trou 10 du manchon 6. Cette seconde gorge 28 communique par au moins un second trou radial 30 avec une troisième gorge 32 annulaire formée entre la surface extérieure du manchon 6 et l'alésage 4 intérieur du bâti 2. Cette troisième gorge 32 communique enfin avec des moyens d'injection 36 de gaz par un trou 34 formé dans le bâti 2. De préférence, le gaz utilisé est de l'hélium.

L'extrémité de la buse 12 opposée à celle recevant la gaine 16 se prolonge au-delà du bâti 2 et du manchon 6. Elle comporte plusieurs fenêtres 38 radiales faisant communiquer l'intérieur de la buse avec l'extérieur.

Un vé de guidage 40 est disposé dans l'alignement de la buse d'engainage 12 contre ladite extrémité pourvue de fenêtres 38. Ce vé guide les pastilles combustibles 20 pour les introduire dans la buse 12. Un poussoir 42 permet de pousser ces pastilles 20 du vé de guidage 40 dans la buse d'engainage 12, puis dans la gaine 16.

Un couvercle 44, fixé sur le bâti 2 enveloppe la buse d'engainage 12 jusqu'à son extrémité, ainsi qu'une partie du vé de guidage 40 à proximité de ladite buse 12. Le couvercle 44 forme une cavité 46 autour de la partie de la buse 12 comportant des fenêtres 38 et une cavité 47 sous l'extrémité du vé de guidage 40 appliquée contre la buse 12. Les cavités 46 et 47 sont reliées à des moyens d'aspiration de gaz 48.

Les moyens d'injection d'hélium dans la gorge annulaire 24 permettent le nettoyage de l'extrémité de la gaine 16 par un jet d'hélium commandé dès que le retrait de la gaine 16 (chargé de pastilles 20) est amorcé. La forme de l'épaulement 22 permet une relative étanchéité entre l'intérieur et l'extérieur de la gaine 16 et donc de limiter les risques de contamination. Le jet d'hélium sur l'extrémité de la gaine 16 nettoie celle-ci et évite un nettoyage manuel de cette extrémité, opération toujours délicate.

De plus, les moyens d'aspiration 48 d'hélium permettent, dès le recul de la gaine 16, la création d'un courant d'hélium dans la buse d'engainage 12 dans le sens indiqué par les flèches sur la figure 1. Ce courant d'hélium balaie l'alésage intérieur de la buse 12 de toutes les poussières par les fenêtres 38. Une autre gaine 16 peut alors être introduite dans la buse 12 et appliquée contre l'épaulement 22 sans risque de contamination.

Des moyens d'entraînement sont prévus (en traits mixtes sur la figure 1) pour mettre en rotation la gaine 16. Dès que la gaine 16 vient en contact avec la buse 12, les frottements gaine-buse entraînent la buse en rotation, permettant l'élimination des éclats et poussières qui seraient restés entre les fenêtres 38. De plus, la rotation de la gaine 16 facilite l'introduction des pastilles 20 dans cette gaine 16 sans coincement.

Le fonctionnement du dispositif d'engainage selon l'invention se déroule de la manière suivante :

La gaine 16 arrive en butée contre l'épaulement 22 à l'intérieur de la buse 12 tout en tournant grâce auxdits moyens d'entraînement.

Les pastilles 20 arrivent en colonne sur le vé de guidage 40 face à l'ouverture correspondante de la buse 12.

Le poussoir 42 fait pénétrer la colonne de pastilles 20 à l'intérieur de la buse 12. Les premiers éclats ainsi que la poussière tombent dans la cavité 47 et sont aspirés par les moyens d'aspiration de gaz 48. Les pastilles 20 avancent toujours et la buse 12 tournant, la poussière restée sur les pastilles tombe dans la cavité 46 à travers les fenêtres 38. Puis les pastilles 20 pénètrent à l'intérieur de la gaine 16, leur progression étant facilitée par la rotation de celle-ci.

Dès que l'opération d'engainage est terminée, on injecte de l'hélium sous pression dans la gorge 24 par les moyens d'injection de gaz 36 et la gaine se retire. La pression du gaz injecté refoule la poussière restée sur l'extrémité de la gaine 16 et à l'intérieur de la buse 12 vers les fenêtres 38 afin d'être aspirée par les moyens d'aspiration 48.

Bien entendu, la description ci-dessus n'a été donnée qu'à titre d'exemple, toutes modifications dans les formes de réalisation peuvent être envisagées sans modifier le principe fondamental de l'invention.

On peut par exemple envisager des formes de gorge annulaire 24 différentes de celle représentée sur la figure 2. De même, le nombre de fenêtres 38 est non limitatif.

## Revendications

1. Dispositif d'engainage de pastilles combustibles (20) dans une gaine (16) comprenant une buse d'engainage (12) comportant un alésage séparé, en une première partie (14) dont le diamètre correspond sensiblement au diamètre externe de la gaine (16) et une seconde partie (18) dont le diamètre correspond sensiblement au diamètre externe des pastilles (20), par un épaulement (22) formant butée, et des moyens (40, 42) pour introduire les pastilles (20) dans la seconde partie (18) de l'alésage, la gaine (16) étant introduite dans la première partie (14) et en butée contre l'épaulement (22), caractérisé en ce que ledit épaulement (22) comporte une paroi tronconique (23), la section méridienne dudit épaulement (22) formant un angle aigu orienté vers la gaine (16), de telle sorte que la gaine (16) vient en butée contre la paroi (23) de l'épaulement (22) selon un cercle, et en ce qu'une gorge annulaire (24) limitée d'un côté par ledit épaulement (22) est formée dans la première partie (14) de l'alésage et que ladite gorge (24) est mise en communication avec des moyens d'injection de gaz (36) permettant le nettoyage de l'extrémité de la gaine (16).

2. Dispositif d'engainage selon la revendication 1, caractérisé en ce qu'au moins une fenêtre (38) communiquant avec des moyens d'aspiration de gaz (48) est ménagée dans la seconde partie (18) de l'alésage afin d'éliminer des éclats et poussières de pastilles combustibles (20).

3. Dispositif d'engainage selon l'une quelconque des revendications 1 et 2, caractérisé en ce qu'il est pourvu d'un poussoir (42) permettant de déplacer les pastilles (20) d'un vé de guidage (40) dans la seconde partie de l'alésage de la buse d'engainage (12) puis dans la gaine (16).

4. Dispositif d'engainage selon l'une quelconque des revendications 1 à 3, caractérisé en ce que des moyens d'entraînement sont prévus pour mettre en retation la gaine (16).

5. Dispositif d'engainage selon l'une quelconque des revendications 1 à 4, caractérisé en ce que le gaz circulant grâce aux moyens d'injection (36) et aux moyens d'aspiration (48) est de l'hélium.

## Claims

1. Device for canning fuel pellets (20) in a can (16) comprising a canning nozzle (12) having a bore subdivided into a first part (14), whose diameter substantially corresponds to the external diameter of the can (16) and a second part (18), whose diameter substantially corresponds to the external diameter of the pellets (20), by a shoulder (22) forming an abutment, and means (40, 42) for introducing the pellets (20) into the second part (18) of the bore, the can (16) being introduced into the first part (14) and abuts against the shoulder (22), characterized in that the shoulder 22 has a frustum-shaped wall (23), the meridian section of said shoulder (22) forming an acute angle oriented towards the can (16), so that the latter abuts against the wall (23) of the shoulder (22) along a circle and in that an annular groove (24) limited on one side by said shoulder (22) is formed in the first part (14) of the bore and said groove (24) is linked with gas injection means (36) permitting the cleaning of the end of can (16).

2. Canning device according to claim 1, characterized in that at least one window (38) linked with the gas suction means (48) is provided in the second part (18) of the bore, so as to eliminate fuel pellet dust and fragments (20).

3. Canning device according to one of the claims 1 and 2, characterized in that a plunger (42) is provided making it possible to move the pellets (20) from a guidance vee (40) into the second part of the bore of canning nozzle (12) and then into the can (16).

4. Canning device according to any one of the claims 1 to 3, characterized in that drive means are provided for rotating the can (16).

5. Canning device according to any one of the claims 1 to 4, characterized in that the gas circulating as a result of the injection means (36) and suction means (48) is helium.

## Patentansprüche

1. Vorrichtung zum Ummanteln von Brennstofftabletten (20) mit einem Mantel (16), enthaltend eine Ummantelungsdüse (12), die eine Bohrung aufweist, die in einen ersten Abschnitt (14), dessen Durchmesser im wesentlichen dem Außendurchmesser des Mantels (16) entspricht, und einen zweiten Abschnitt (18), dessen Durchmesser im wesentlichen dem Außendurchmesser der Tabletten (20) entspricht, durch eine einem Anschlag bildende Schulter (22) unterteilt ist, und Einrichtungen (40, 42) zum Einführen der Tabletten (20) in den zweiten Abschnitt (18) der Bohrung, wobei der Mantel (16) in den ersten Abschnitt (14) und in Anlage an die Schulter (22) eingeführt wird, dadurch gekennzeichnet, daß die genannte Schulter (22) eine kegelstumpfartige Wand (23) aufweist, wobei der Meridianschnitt der genannten Schulter (22) einen gegen den Mantel (16) gerichteten spitzen Winkel bildet derart, daß der Mantel (16) in Anlage an die Wand (23) der Schulter (22) gemäß einem Kreis kommt, und daß eine ringförmige Auskehlung (24), die an einer Seite von der genannten Schulter (22) begrenzt ist, in dem ersten Abschnitt (14) der Bohrung ausgebildet ist und mit Einrichtungen zum Einleiten von Gas (36) in Verbindung ist, das die Reinigung des Endes Mantels (16) erlaubt.

2. Ummantelungsvorrichtung nach Anspruch 1, dadurch gekennzeichnet, daß wenigstens ein Fenster (38), das mit Gasabsaugeinrichtungen (48) in Verbindung steht, in dem zweiten Abschnitt (18) der Bohrung ausgebildet ist, um Splitter und Staub von Brennstofftabletten (20) zu beseitigen.

3. Ummantelungsvorrichtung nach einem der Ansprüche 1 und 2, dadurch gekennzeichnet, daß sie mit einem Stößel (42) versehen ist, der es erlaubt, die Tabletten (20) von einem Führungsprisma (40) in den zweiten Abschnitt der Bohrung der Ummantelungsdüse (12) und dann in den Mantel (16) zu schieben.

4. Ummantelungsvorrichtung nach einem der Ansprüche 1 bis 3, dadurch gekennzeichnet, daß Antriebseinrichtungen vorgesehen sind, um den Mantel (16) in Drehung zu versetzen.

5. Ummantelungsvorrichtung nach einem der Ansprüche 1 bis 4, dadurch gekennzeichnet, daß das Gas, das aufgrund der Einleiteinrichtungen (36) und der Absaugeinrichtungen (48) zirkuliert, Helium ist.

FIG.1

EP 0 211 853 B1

FIG.2

EP 0 211 853 B1